# EUROPÄISCHE PATENTSCHRIFT

(11) **EP 1 640 621 B1**
(45) Veröffentlichungstag und Bekanntmachung des Hinweises auf die Patenterteilung: **21.02.2007**
(21) Anmeldenummer: 05015500.1
(22) Anmeldetag: 16.07.2005
(51) Int. Cl.: F16B 7/18

(54) **Strebe oder Aufnahmeteil mit rechtwinkligem Querschnitt für ein System zum Aufbau von Vorrichtungen zum Aufspannen von Werkstücken**
Bar or frame part with right-angled cross section for a system for the setting up devices to fix workpieces
Pièce de barre ou d'armature avec la coupe transversale rectangulaire pour un système à la construction des dispositifs fixent des objets

(30) Priorität: 23.09.2004 DE 202004014974 U
(43) Veröffentlichungstag der Anmeldung: 29.03.2006
(73) Patentinhaber: Horst Witte Entwicklungs- und Vertriebs KG, 21369 Nahrendorf (DE)
(72) Erfinder: Witte, Horst, 21369 Nahrendorf (DE)
(74) Vertreter: Fleck, Thomas

(56) Entgegenhaltungen:
- EP-A- 1 484 454
- DE-A1- 2 504 721
- DE-U1- 8 910 310
- GB-A- 967 965

## Beschreibung

Die Erfindung betrifft ein System nach dem Oberbegriff des Anspruches 1.

Ein derartiges System ist aus der DE 25 04 721 A1 bekannt. Bei diesem System wird eine Eckverbindung zwischen den Streben mit Hilfe eines Verbindungselementes dadurch hergestellt, dass die Rasterbohrungen in den Streben in Achsrichtung, d.h. senkrecht auf die zylindrisch ausgebildeten Befestigungszapfen aufgesteckt werden. Anschließend erfolgt ein Verschrauben.

Das Verbindungselement weist nur eine Fläche mit im Rastermaß beabstandeten zylindrischen Befestigungszapfen auf. Ein anderes System ist aus der EP 1 484 454 A2 bekannt, das aber an dem Verbindungselement keine Befestigungszapfen aufweist, die mit den Rasterbohrungen korrespondieren. Die Verbindung erfolgt allein durch Schrauben, die in den Rasterbohrungen angeordnet werden. Entsprechendes gilt für die GB 967965 A und die DE 98 10 310 U1.

Der Erfindung liegt nun die Aufgabe zugrunde ein einfaches System der eingangs genannten Art zu schaffen, bei dem das Verbindungselement sicher und unverrückbar mit der zugeordneten Strebe verbunden wird.

Diese Aufgabe wird durch das Kennzeichen des Anspruches 1 gelöst.

Erfindungsgemäß besteht das System aus regelmäßigen rechtwinkligen Profilen, in deren durch jeweils zwei rechtwinklig aufeinander stoßenden Schenkeln gebildete Ecken die Verbindungselemente derart einsteckbar sind, dass zwei Flächen aneinander liegen und so für eine sichere und unverrückbare Verbindung sorgen. Das Verbindungselement ist schräg, d.h. unter einem Winkel von ca. 45° in die Ecke einsteckbar, so dass zwei rechtwinklig zueinander liegende Flächen des Verbindungselementes an den zugeordneten Flächen der Ecke der ausgewählten Strebe anliegen. Es erfolgt dann nur noch ein endgültiges Befestigen in üblicher Weise mit Hilfe von Schrauben. Durch die Abschrägung der Befestigungszapfen wird das Einstecken im Winkel von 45° ermöglicht, wobei gleichzeitig ein Einrasten der Befestigungszapfen zur Erstellung der gewünschten Verbindung sichergestellt ist.

Im folgenden wird die Erfindung unter Hinweis auf die Zeichnung anhand verschiedener Ausführungsbeispiele näher erläutert.

Es zeigt:
- Fig. 1: eine perspektivische Ansicht eines Systems zum Aufbau von Vorrichtungen zum Aufspannen von Werkstücken, das aus Streben und Aufnahmeteilen unter Einsatz entsprechender Verbindungselemente aufgebaut ist;
- Fig. 2: eine perspektivische Ansicht eines Aufnahmeteils, gebildet aus zwei U-Profilen, verbunden durch Passschrauben;
- Fig. 3: eine auseinander gezogene perspektivische Ansicht eines Aufnahmeteils, das aus zwei U-Profilen zusammengesetzt wird und mit Hilfe besonderer Verbindungselemente verbunden wird;
- Fig. 4: eine perspektivische Ansicht einer Eckverbindung, bei der Diagonalstreben den Versatz zwischen entsprechenden im Winkel angeordneten Aufnahmeteilen ausgleichen;
- Fign. 5 bis 10: perspektivische Ansichten einer Eckverbindung bei einem Winkelprofil mit einem besonderen Verbindungselement, das wie in Fig. 7 dargestellt gedreht werden kann, um unterschiedlich gestaltete Stirnseiten zum Einsatz zu bringen.
- Fign. 11 und 12: perspektivische Ansichten eines Winkelprofils mit einem Verbindungselement einer ersten Ausführungsform mit vier Befestigungszapfen und einer Druckplatte;
- Fign. 13 und 14: eine perspektivische Ansicht eines U-Profils mit einem Verbindungselement mit Druckplatte einer weiteren Ausführungsform;
- Fign. 15 und 16: perspektivische Ansichten noch einer weiteren Ausführungsform eines Verbindungselementes, angebaut an ein Winkelprofil;
- Fign. 17 bis 20: Ansichten von unterschiedlichen Verbindungselementen mit 2,4 bzw. 6 Befestigungszapfen; und
- Fig. 21: verschiedene Ansichten verschiedener Querschnittsformen aufgebaut aus unterschiedlichen Winkel- und/oder U-Profilen.

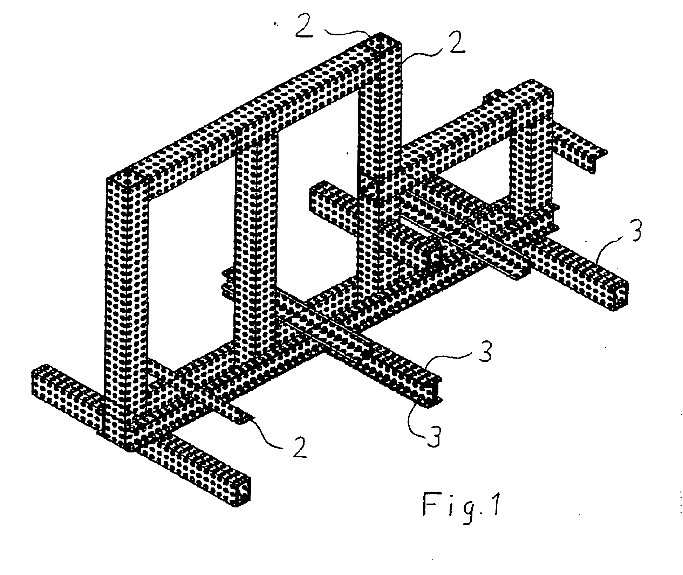

In Fig. 1 ist ein System zum Aufbau von Vorrichtungen dargestellt. Dieses besteht aus unterschiedlichen Aufnahmeteilen, die entweder einen geschlossenen Querschnitt oder einen offenen Querschnitt aufweisen, und aus Winkel- und/oder U-Profilen zusammengesetzt bzw. gebildet sind. Diese Profile weisen in einem regelmäßigen Rasterabstand Rasterbohrungen auf, die vorzugsweise als Passbohrungen ausgebildet sind und die der Befestigung von Verbindungselementen zur Anbringung weiterer Werkzeuge und der Verbindung untereinander dienen.

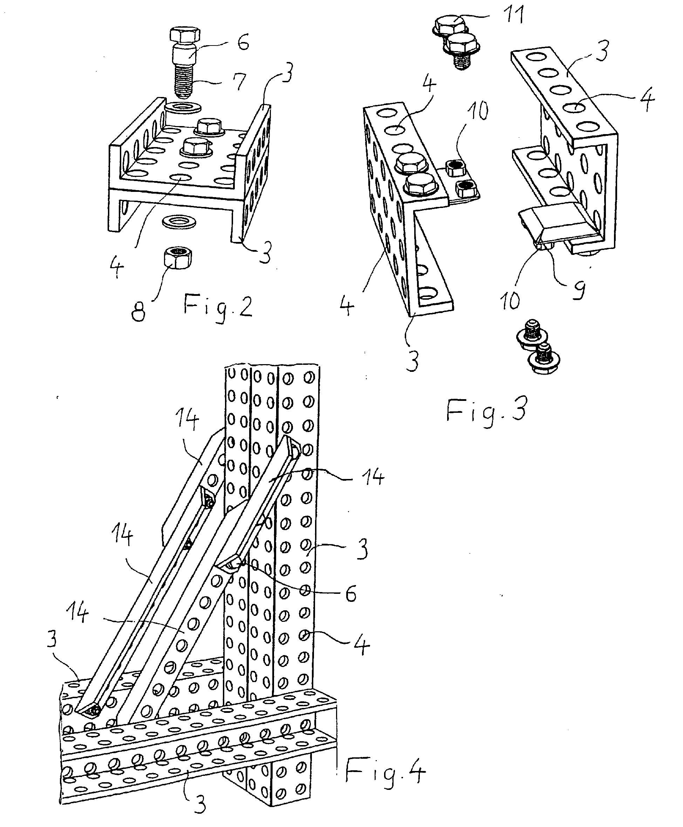

Die einzelnen Streben, die die Aufnahmeteile des Systems bilden, können so aufgebaut und zusammengesetzt werden, wie in den Fign. 2 und 3 dargestellt. Grundsätzlich kommen offene Profile, die Winkelprofile 2 oder U-Profile 3 sind, zum Einsatz und die durch Passschrauben 6,7 und Muttern 8 (Fig. 2) oder besondere Verbindungselemente (Fig. 3) zusammengebaut werden. Wenn der Zusammenbau so erfolgt wie in Fig. 2 dargestellt, entsteht ein offenes Doppel-T-Profil aus zwei U-Profilen. Bei dem Zusammenbau nach Fig. 3 entsteht ein geschlossenes Rechteckprofil aus zwei U-Profilen.

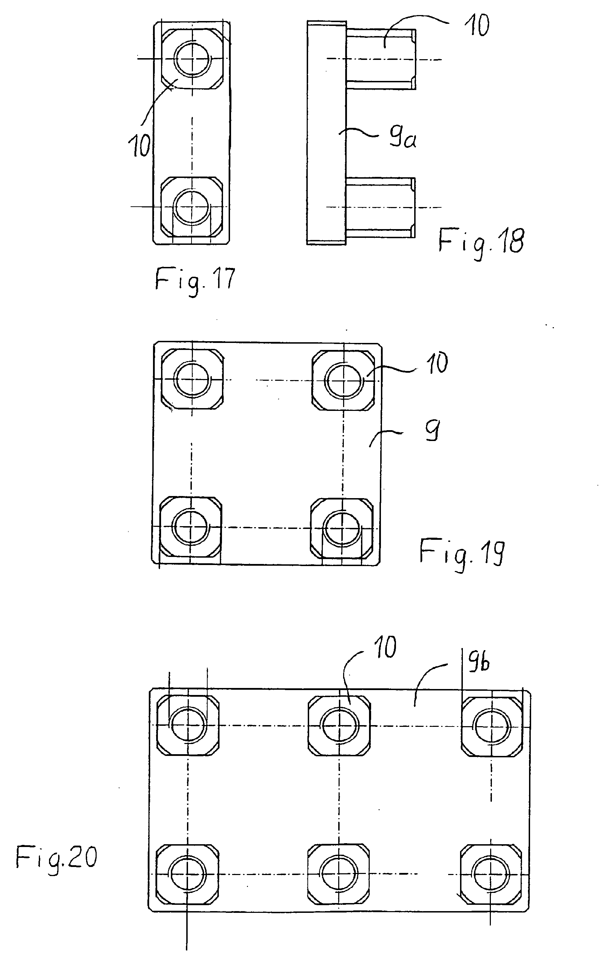

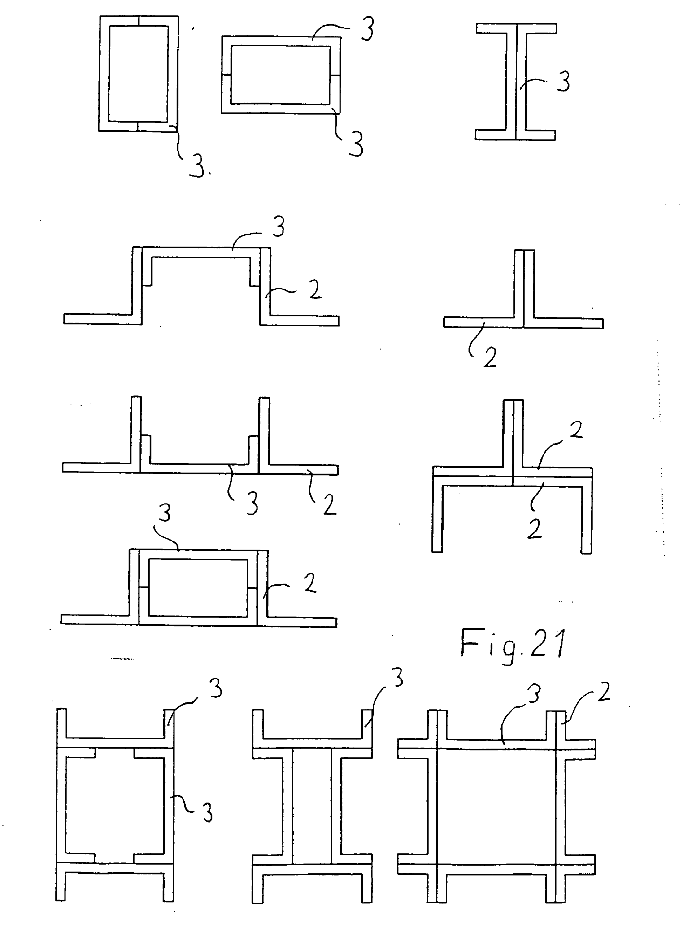

Wenn ein Verbindungselement, so wie in Fig. 3 dargestellt und in verschiedenen Ausgestaltungen in den Fign. 17 bis 20 gezeigt, zum Einsatz kommt, dann liegt eine Grundplatte 9 mit vier Befestigungszapfen 10 vor (Fig. 3 und Fig. 19). Die Befestigungszapfen 10 passen passgenau in die Rasterbohrungen, da ihre vier Ecken entsprechend bearbeitet und abgerundet sind. Die vier Ecken liegen auf einem Durchmesser durch den Mittelpunkt der Gewindebohrung in den Befestigungszapfen, die der Aufnahme von Schrauben 11 dient. Mit Hilfe derartiger Verbindungselement lässt sich eine starre und sehr genaue Verbindung von zwei Winkel und/oder U-Profilen herstellen. In Fig. 21 sind unterschiedliche Beispiele gezeigt.

In Fig. 4 ist eine Eckverbindung dargestellt, die aus U-Profilen 3 aufgebaut wurde, die mit entsprechenden nicht gezeigten Verbindungselementen in einem rechten Winkel zueinander angeordnet sind. Dieser Aufbau wird durch Diagonalstreben versteift, die aus zwei Winkelprofilen 14 zusammengesetzt sind. In einem Schenkel jedes Winkelprofils 14 sind in dem vorgesehenen Rastermaß beanstandete Rasterbohrungen 4 vorgesehen. Diese dienen der Verbindung der Winkelprofile einer Diagonalstrebe untereinander sowie der Befestigung einer Diagonalstrebe an den Winkelprofilen 3. Unter Berücksichtigung des Gesetzes des Pythagoras lassen sich ohne Schwierigkeiten im Rastermaß beabstandete Rasterbohrungen auswählen, um den gezeigten Aufbau zu ermöglichen. Wenn die Rasterbohrungen auf dem U-Profil einen Abstand von 6 Rasterbohrungen, auf dem anderen senkrechten U-Profil einen Abstand von 8 Rasterbohrungen aufweisen, ergibt sich bei der Diagonalstrebe ein Abstand von 10 Rasterbohrungen.

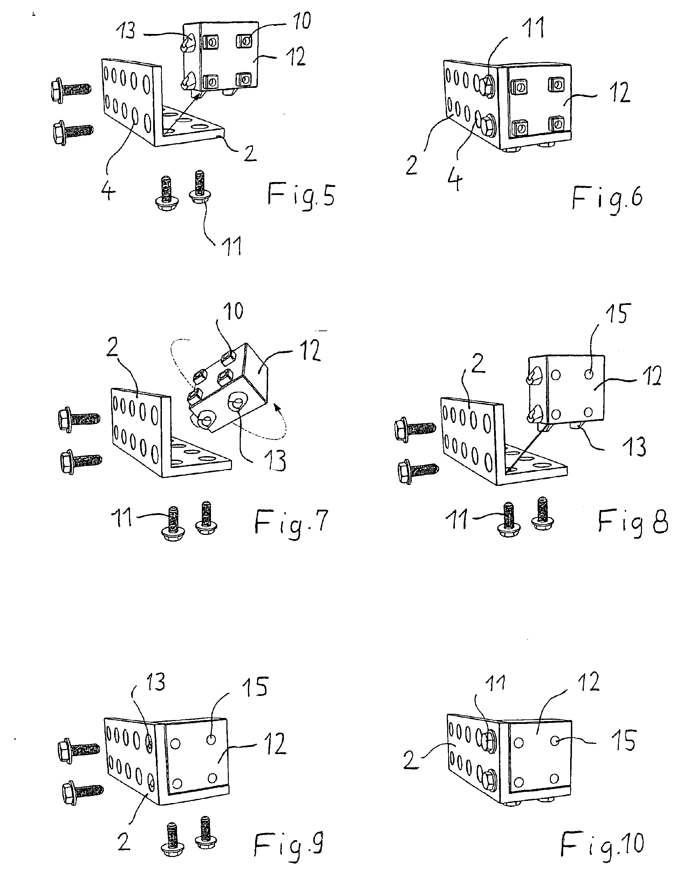

Ein besonderes Verbindungselement 12 ist in den Fign. 5 bis 10 dargestellt. Hierbei handelt es sich um eine so genannte "Stirnplatte", die an zwei rechtwinklig aneinander angrenzenden Seitenflächen besondere Befestigungszapfen 13 aufweist, die so abgeschrägt sind, dass sie in die Ecke eines Winkelprofiles einschiebbar sind. An den in den Figuren 5 und 6 gezeigten Stirnflächen sind Befestigungszapfen 10 ausgebildet, die denen der Fig. 3 entsprechen und der Anordnung eines weiteren Profils im Winkel oder der Befestigung einer Werkzeugaufnahme dienen.

Dieses besondere als Stirnplatte ausgebildete Verbindungselement 12 kann, so wie in Fig. 7 angedeutet, gedreht werden, so dass dann auf der vorderen zugänglichen Seite normale Befestigungsbohrungen 15 vorgesehen sein können, die wiederum in das gesamte Rastermaß der Rasterbohrungen 4 passen. Die Anordnung und Befestigung ergibt sich aus der Abfolge der Fign. 7 bis 10.

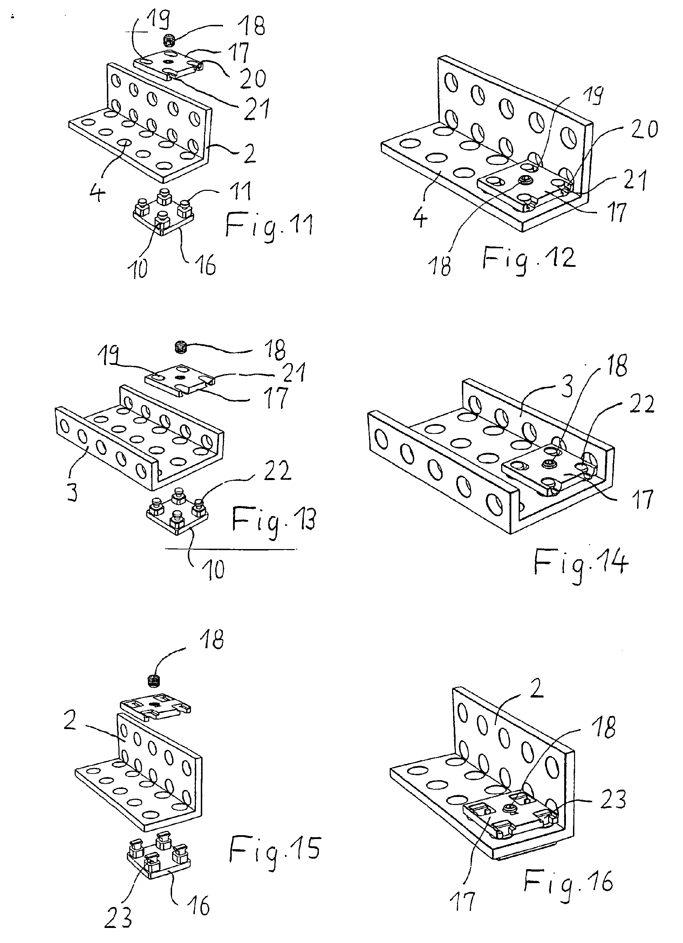

In den Fign. 11 bis 17 ist ein Verbindungselement dargestellt, das als Schnellverbinder ausgebildet ist. Dieses besteht aus einer Grundplatte 16 mit vier Befestigungszapfen 10, die passgenau in die Rasterbohrungen passen. Eingeschraubt sind Schrauben 11. Eine Druckplatte 17 mit besonderen Kupplungsöffnungen 19 und 21 kann über die Schrauben geschoben werden, so dass eine formflüssige Verbindung mit den Schrauben entsteht. Eine einzige zentrisch angeordnete Druckschraube 18 dient der Festsetzung der Druckplatte und damit der gewünschten präzisen Anordnung des Verbindungselementes.

Die Ausführungsformen nach Fign. 13 und 14 unterscheiden sich dadurch von denen der Fign. 11 und 12, dass anstelle der Schrauben 11 angewachsene Vorsprünge mit runden Köpfen zum Einsatz kommen.

Die Ausführungsformen nach Fign. 15 und 16 zeigen anstelle der runden angewachsenen Vorsprünge solche mit rechteckigem Querschnitt 23, die entsprechend in die Kupplungsöffnungen 19 und 21 der Druckplatte eingreifen und nach dem Verschieben die formschlüssige Verbindung bilden.

Die Fign. 17 bis 20 zeigen unterschiedliche Verbindungselemente mit einer kleinen Grundplatte 9a mit zwei Befestigungszapfen 10, einer Grundplatte 9 mit vier Befestigungszapfen 10 und einer Grundplatte 9b mit sechs Befestigungszapfen 10.

Fig. 21 zeigt unterschiedliche Querschnittsformen von Aufnahmeteilen, die durch unterschiedliche U- und/oder Winkelprofile hergestellt sind.

Die Winkel- oder U-Profile, bei denen es sich wie gesagt auch um T, Doppel-T oder Z-Profile handeln kann, sind handelsübliche Profile, die entsprechend kostengünstig sind. Beim Zusammenbau können geringfügige Schwankungen in der Dicke und in anderen Abmessungen durch Fasen ausgeglichen werden, die in den Rasterbohrungen vorgesehen sind, wie es in den Fign. 7 und 8 sowie 13 bis 16 dargestellt ist. Diese Fasen gleichen Abmessungsschwankungen aus, so dass die wirksame Länge der Rasterbohrung immer gleich ist.

Die Verbindungselemente der unterschiedlichen Ausführunsformen können sowohl zum Verbinden der Profile untereinander als auch zum Anbau weiterer Werkstückaufnahmen eingesetzt werden. Dann handelt es sich um "Anbauelemente".

## Patentansprüche

1. System zum Aufbau von Vorrichtungen zum Aufspannen von Werkstücken in definierter und reproduzierbarer Lage mit Streben, die in regelmäßigen Koordinatenabständen angeordnete Rasterbohrungen gleichen Durchmessers aufweisen, und die aus rechtwinkligen Profilen, insbesondere Winkel- und/oder U-Profilen gebildet sind, deren Schenkel mit den von beiden Seiten zugänglichen Rasterbohrungen versehen sind, und mit Verbindungselementen, die im Rastermaß beabstandete Befestigungszapfen zum Einstecken in die Rasterbohrungen aufweisen, **dadurch gekennzeichnet, dass** die Befestigungszapfen (13) an zwei rechtwinklig aneinander stoßenden außen liegenden Seitenflächen der Verbindungselemente (12) ausgebildet und derart abgeschrägt sind, dass sie unter ca. 45° in die Rasterbohrungen (4) der beiden Schenkel einsteckbar sind.

2. System nach Anspruch 1, **dadurch gekennzeichnet, dass** weitere Befestigungszapfen (10) und/oder Befestigungsbohrungen (15) im Rastermaß an den nicht mit abgeschrägten Befestigungszapfen (13) aus versehenen Seitenflächen der Verbindungselemente (12) vorgesehen sind.

## Claims

1. System for the construction of devices for clamping workpieces in a defined, reproducible position using braces, which at regular coordinate spacings have grid holes with the same diameter and which are in the form of rectangular profiles, particularly angular and/or U-profiles, whose legs are provided with grid holes accessible from both sides, and with connecting elements which have fastening pins spaced with the pitch for insertion into the grid holes, **characterized in that** the fastening pins (13) are constructed on two rectangularly abutting, external lateral faces of the connecting elements (12) and are bevelled in such a way that they can be inserted under an angle of approximately 45° into the grid holes (4) of the two legs.

2. System according to claim 1, **characterized in that** further fastening pins (10) and/or fastening holes (15) are provided in the pitch on the lateral faces of the connecting elements (12) not provided with bevelled fastening pins (13).

## Revendications

1. Système de rattachement de dispositifs d'ablocage de pièces à usiner, dans une position bien définie et reproductible, comprenant des entretoises qui présentent des perçages modulaires de diamètres égaux, agencés selon des espacements de coordonnées uniformes, et qui sont formées par des profilés à angle droit, notamment des profilés en cornière et/ou en U dont les branches sont munies des perçages modulaires accessibles à partir des deux côtés ; et des éléments de solidarisation comportant des tenons de fixation espacés de la cote modulaire, en vue de l'emboîtement dans lesdits perçages modulaires, **caractérisé par le fait que** les tenons de fixation (13) sont façonnés sur deux faces latérales des éléments de solidarisation (12) qui sont situées à l'extérieur et se rencontrent mutuellement à angle droit, lesdits tenons étant biseautés de façon telle qu'ils puissent être emboîtés, à environ 45°, dans les perçages modulaires (4) des deux branches.

2. Système selon la revendication 1, **caractérisé par le fait que** des tenons de fixation (10) et/ou des perçages de fixation (15) supplémentaires sont prévus, selon la cote modulaire, sur les surfaces latérales des éléments de solidarisation (12) dépourvues de tenons biseautés de fixation (13).
